(19) Europäisches Patentamt
European Patent Office
Office européen des brevets

(11) Veröffentlichungsnummer: **0 002 665**
**A1**

(12) # EUROPÄISCHE PATENTANMELDUNG

(21) Anmeldenummer: **78101395.8**

(22) Anmeldetag: **18.11.78**

(51) Int. Cl.²: **A 23 K 1/17**, C 07 D 407/06, A 61 K 31/35, A 61 K 31/365

(30) Priorität: **01.12.77 DE 2753513**

(43) Veröffentlichungstag der Anmeldung: **11.07.79 Patentblatt 79/14**

(84) Benannte Vertragsstaaten: **BE CH DE FR GB NL SE**

(71) Anmelder: **Bayer Aktiengesellschaft, Zentralbereich Patente,Marken und Lizenzen Bayerwerk, D-5090 Leverkusen 1 (DE)**

(72) Erfinder: **Scheer, Martin, Dr., Claudiusweg 9, D-5600 Wuppertal 1 (DE)**
Erfinder: **Anke, Heidrun, Dr., Hauserstrasse 150, D-7400 Tübingen (DE)**
Erfinder: **König, Wilfried, Prof. Dr., Grosser Reitweg 36, D-2080 Pinneberg (DE)**
Erfinder: **Zähner, Hans, Dr.-Ing., Im Hopfengarten 13, D-7400 Tübingen (DE)**

(54) **Antibakterielle Mittel und ihre Verwendung im Tierfutter.**

(57) Antibakterielle Mittel, die Cladosporin und/oder eine Verbindung der Formel

$OR_2$ O $CH_3$

$R_1O$

enthalten, wobei $R_1$ und $R_2$ Wasserstoff, Methyl oder Acetyl bedeuten.

Ihre Verwendung in Tierfutter fördert das Wachstum und die Futterverwertung von Tieren.

EP 0 002 665 A1

BEZEICHNUNG GEÄNDERT
siehe Titelseite

**BAYER AKTIENGESELLSCHAFT** 5090 Leverkusen, Bayerwerk
Zentralbereich
Patente, Marken und Lizenzen PG-kl

**Antibakterielle Mittel**

Die vorliegende Erfindung betrifft neue antibakterielle Mittel, die Cladosporin und/oder eine Verbindung der Formel I

(I)

in der

$R_1$ Wasserstoff, Methyl oder Acetyl und

$R_2$ Wasserstoff, Methyl oder Acetyl bezeichnen kann,

enthalten.

Des weiteren betrifft die Erfindung die Verwendung von Cladosporin und/oder einer Verbindung gemäß Formel I bei der Tierernährung.

Bevorzugte Verwendung findet Cladosporin.

Cladosporin und Verbindungen der Formel I sind aus der US-Patentschrift 3 838 171 und den Veröffentlichungen P.M. Scott, W. van Walbeck /J. Antibiotics XXIV, 747-755 (1971)/, G.N. Ellestad, P. Mirando, M.P. Kunstmann /J. Org. Chem. 38, 4204-4205 (1973)/, L. Cattel, J.F. Grove, D. Shaw /J. Chem. Soc. Perkin Trans. I 1972, 2626-2629/ bekannt oder können aus den bekannten Verbindungen in üblicher Weise erhalten werden. Überraschenderweise wurde nun gefunden, daß Cladosporin und Verbindungen der Formel I eine antibakterielle Wirksamkeit gegen bestimmte Keime, insbesondere gegen Bacillus brevis, Clostridium pasteurianum, Arthrobacter citreus und Sarcina lutea daneben aber auch gegen Stämme von Escherichia coli, Streptomyces viridochromogenes und Nocardia brasiliensis aufweist.

Die Bestimmung der antibakteriellen Aktivität erfolgt im Verdünnungsreihen- oder Plattendiffusionstest.

Tabelle 1 zeigt die antibakterielle Aktivität von Cladosporin am Beispiel von vier Keimen und gibt die Arbeitsbedingungen an.

Tabelle 1

Antibakterielle Aktivität von Cladosporin

| Organismus | Temp. [°C] | Medium | MIC* (µg/ml) |
|---|---|---|---|
| Arthrobacter citreus ATCC 11 624 | 27 | I | 1,0-2,0 |
| Bacillus brevis ATCC 9999 | 37 | I | 0,05-0,1 |
| Clostridium pasteurianum ATCC 6013 | 30 | II | 0,05-0,1** |
| Sarcina lutea ATCC 381 | 27 | I | 2,0-5,0 |

MIC = Minimal inhibitory concentration

* Verdünnungsreihentest; Inkubationsdauer von 15 h; Impfmenge/ml $2 \times 10^6$ Zellen

**Plattendiffusionstest

Medium: I Nutrient Broth (Difco); II 3 g Fleischextrakt, 3 g Malzextrakt, 3 g Hefeextrakt, 20 g Pepton, 5 g Glucose, 0,2 g Ascorbinsäure, 14 g Agar, 1 l Wasser.

Des weiteren weisen Cladosporin und Verbindungen gemäß Formel I überraschenderweise die Eigenschaft auf, bei Tieren das Wachstum zu fördern und zu beschleunigen und die Futterverwertung zu verbessern, so daß diese Verbindungen in allen Bereichen der Tierzucht und Tierhaltung zu den genannten Zwecken eingesetzt werden können.

Die Wirksamkeit der erfindungsgemäß verwendeten Verbindungen ist hierbei weitgehend unabhängig von der Art und dem Geschlecht der Tiere. Besonders wertvoll erweisen sich Cladosporin und Verbindungen gemäß Formel I bei der Aufzucht und Haltung von Jung- und Masttieren. Als Tiere, bei denen die Verbindungen zur Förderung und Beschleunigung des Wachstums, zur Futtermitteleinsparung und damit zur Verbesserung der Futterverwertung eingesetzt werden kann, seien beispielsweise folgende Nutz- und Ziertiere genannt:

Warmblüter wie Rinder, Schweine, Pferde, Schafe, Ziegen, Katzen, Hunde, Kaninchen, Pelztiere, z.B. Nerze und Chinchilla, Geflügel, z.B. Hühner, Gänse, Enten, Truthähne, Broiler, Tauben, Papageien und Kanarienvögel und Kaltblüter, wie Fische, z.B. Karpfen und Reptilien, z.B. Schlangen.

Bevorzugte Anwendung finden Cladosporin und Verbindungen der Formel I bei der Aufzucht und Haltung von Wiederkäuern wie Kälber, Ziegen, Schafe, sowie bei Schweinen und Küken.

Die Menge von Cladosporin und/oder Verbindungen gemäß Formel I, die den Tieren zur Errechung des gewünschten Effektes verabreicht wird, kann weitgehend variiert werden. Sie liegt vorzugsweise bei etwa 5 bis 500, insbesondere 10 bis 100 mg/kg Körpergewicht pro Tag. Die Dauer der Verabreichung kann von wenigen Stunden oder Tagen bis zu mehreren Jahren betragen. Die passende Menge Wirkstoff sowie die passende Dauer der Verabreichung hängen insbesondere von der Art, dem Alter, dem Geschlecht, dem Gesundheitszustand und der Art der Haltung der Tiere ab und sind durch jeden Fachmann leicht zu ermitteln.

Die Verbindungen werden den Tieren nach den üblichen Methoden verabreicht. Die Art der Verabreichung hängt insbesondere von der Art, dem Verhalten und dem Gesundheitszustand der Tiere ab. So kann die Verabreichung einmal oder mehrmals täglich in regelmäßigen oder unregelmäßigen Abständen oral oder parenteral erfolgen. Aus Zweckmäßigkeitsgründen ist in den meisten Fällen eine orale Verabreichung, insbesondere im Rhythmus der Nahrung- und/oder Getränkeaufnahme der Tiere, vorzuziehen.

Die Verbindungen können als reine Stoffe oder in formulierter Form, also in Mischung mit nichttoxischen inerten Trägerstoffen, als solche sind feste, halbfeste oder flüssige Verdünnungsmittel, Füllstoffe und Formulierungshilfsmittel jeder Art zu verstehen, verabreicht werden.

Cladosporin und/oder Verbindungen gemäß Formel I können gegebenenfalls in formulierter Form auch zusammen mit pharmazeutischen Wirkstoffen, Mineralsalzen, Spurenelementen, Vitaminen, Eiweißstoffen, Fetten, Farbstoffen und/ oder Geschmacksstoffen in geeigneter Form verabreicht werden.

Empfehlenswert ist die orale Verabreichung zusammen mit dem Futter und/oder Trinkwasser, wobei je nach Bedarf die Wirkstoffe der Gesamtmenge oder nur Teilen des Futters und/ oder Trinkwassers zugegeben werden.

Die Verbindungen können nach üblichen Methoden durch einfaches Mischen als reine Stoffe, vorzugsweise in fein verteilter Form oder in formulierter Form in Mischung mit eßbaren nichttoxischen Trägerstoffen, gegebenenfalls auch in

Form eines Praemix oder eines Futterkonzentrates, dem Futter und/oder Trinkwasser beigefügt werden.

Das Futter und/oder Trinkwasser kann beispielsweise den erfindungsgemäßen Wirkstoff in einer Konzentration von etwa 5 bis 500, insbesondere 10 bis 100 ppm enthalten. Die optimale Höhe der Konzentration des Wirkstoffs in dem Futter und/oder Trinkwasser ist insbesondere abhängig von der Menge der Futter- und/oder Trinkwasseraufnahme der Tiere und kann durch jeden Fachmann leicht ermittelt werden.

Die Art des Futters und seine Zusammensetzung ist hierbei ohne Belang. Es können alle gebräuchlichen, handelsüblichen oder speziellen Futterzusammensetzungen verwendet werden, die vorzugsweise das übliche, für eine ausgewogene Ernährung notwendige Gleichgewicht aus Energie- und Aufbaustoffen einschließlich Vitaminen und Mineralstoffen enthalten. Das Futter kann sich beispielsweise zusammensetzen aus pflanzlichen Stoffen, z. B. Heu, Rüben, Getreide, Getreidenebenprodukten, tierischen Stoffen, z. B. Fleisch, Fetten, Knochenmehl, Fischprodukten, Vitaminen, z. B. Vitamin A, D-Komplex und B-Komplex, Proteinen, Aminosäuren, z. B. DL-Methionin und anorganischen Stoffen, z. B. Kalk und Kochsalz.

Futterkonzentrate enthalten Cladosporin und/oder Verbindungen gemäß Formel I neben eßbaren Stoffen, z.B. Roggenmehl, Maismehl, Sojabohnenmehl oder Kalk, gegebenenfalls mit weiteren Nähr- und Aufbaustoffen sowie Proteinen, Mineralsalzen und Vitaminen. Sie können nach den üblichen Mischmethoden hergestellt werden.

Vorzugsweise in Praemixen und Futterkonzentrationen können die Wirkstoffe gegebenenfalls auch durch seine Oberfläche bedeckenden geeigneten Mittel, z.B. mit nichttoxischen Wachsen oder Gelatine vor Luft, Licht und/oder Feuchtigkeit geschützt werden.

Beispiel für die Zusammensetzung eines Kükenaufzuchtfutters, das Cladosporin enthält:

**2oo g Weizen, 34o g Mais, 361 g Sojaschrot, 6o g Rindertalg, 15 g Dicalciumphosphat, 1o g Calciumcarbonat, 4 g jodiertes Kochsalz, 7,5 g Vitamin-Mineral-Mischung und 2,5 g Wirkstoff-Praemix ergeben nach sorgfältigem Mischen 1 kg Futter.**

**Die Vitamin-Mineral-Mischung besteht aus:**
**6ooo I.E. Vitamin A, 1ooo I.E. Vitamin $D_3$, 1o mg Vitamin E, 1 mg Vitamin $K_3$, 3 mg Riboflavin, 2 mg Pyridoxin, 2o mcg Vitamin $B_{12}$, 5 mg Calciumpantothenat, 3o mg Nikotinsäure, 2oo mg Cholinchlorid, 2oo mg $MnSO_4 \times H_2O$, 14o mg $ZnSO_4 \times 7H_2O$, 1oo mg $FeSO_4 \times 7H_2O$ und 2o mg $CuSO_4 \times 5H_2O$.**

Der Wirkstoff-Praemix enthält Cladosporin und/oder eine Verbindung gemäß Formel I in der gewünschten Menge, z.B. 100 mg und zusätzlich 1 g DL-Methionin sowie so viel Sojabohnenmehl, daß 2,5 g Praemix entstehen.

Beispiel für die Zusammensetzung eines Schweineaufzuchtfutters, das den erfindungsgemäßen Wirkstoff enthält:

63o g Futtergetreideschrot (zusammengesetzt aus 2oo g Mais, 15o g Gerste-, 15o g Hafter- und 13o g Weizenschrot), 8o g Fischmehl, 60 g Sojaschrot, 60 g Tapiokamehl, 38 g Bierhefe, 5o g Vitamin-Mineral-Mischung für Schweine (Zusammensetzung z. B. wie beim Kükenfutter), 3o g Leinkuchenmehl, 3o g Maiskleberfutter, 1o g Sojaöl, 1o g Zuckerrohrmelasse und 2 g Wirkstoff-Praemix (Zusammensetzung z. B. wie beim Kükenfutter) ergeben nach sorgfältigem Mischen 1 kg Futter.

Die angegebenen Futtergemische sind vorzugsweise zur Aufzucht und Mast von Küken bzw. Schweinen abgestimmt, sie können jedoch in gleicher oder ähnlicher Zusammensetzung auch zur Aufzucht und Mast anderer Tiere verwendet werden.

14-tägige Fütterungsversuche an Küken und 7-wöchige Fütterungsversuche an Broilern, die 5 ppm bis 50 ppm Cladosporin mit dem Futter enthielten, zeigten deutliche Gewichtszunahme bei den mit Cladosporin behandelten Tieren im Vergleich zu den ohne Zusatz von Cladosporin ernährten Tieren.

Patentansprüche

1. Antibakterielles Mittel enthaltend Cladosporin und/oder eine Verbindung der Formel I

(I)

in der

$R_1$ Wasserstoff, Methyl oder Acetyl und

$R_2$ Wasserstoff, Methyl oder Acetyl bezeichnen kann.

2. Verwendung von Cladosporin und/oder einer Verbindung gemäß Formel I zur Förderung und Beschleunigung des Wachstums und zur Verbesserung der Futterverwertung bei Tieren.

3. Verwendung gemäß Anspruch 2 bei Wiederkäuern.

4. Verwendung gemäß Anspruch 2 bei Schweinen.

5. Verwendung gemäß Anspruch 2 bei Küken und Broilern.

6. Tieren zu verabreichendes Mittel, gekennzeichnet durch einen Gehalt an Cladosporin und/oder einer Verbindung gemäß Formel I.

7. Praemix, gekennzeichnet durch einen Gehalt an Cladosporin und/oder einer Verbindung gemäß Formel I.

8. Tierfutter, gekennzeichnet durch einen Gehalt an Cladosporin und/oder einer Verbindung gemäß Formel I.

9. Verfahren zur Herstellung von Mitteln gemäß den Ansprüchen 6, 7 und 8, dadurch gekennzeichnet, daß man Cladosporin und/oder eine Verbindung gemäß Formel I mit nichttoxischen eßbaren Trägerstoffen vermischt.

10. Verfahren zur Herstellung eines Tierfutters gemäß Anspruch 8, dadurch gekennzeichnet, daß man Cladosporin und/oder eine Verbindung gemäß Formel I,gegebenenfalls in Form eines Praemixes, mit dem für das Tier vorgesehenen Futter vermischt.

Europäisches Patentamt

# EUROPÄISCHER RECHERCHENBERICHT

0002665

Nummer der Anmeldung

EP 78 101 395.8

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| D | US - A - 3 838 171 (P.M. SCOTT et al) * Anpruch 1, Spalte 1, Zeilen 19 bis 39 * -- | 1 | A 23 K 1/17<br>C 07 D 407/06<br>A 61 K 31/35<br>A 61 K 31/365 |
| A | DE - A - 2 536 202 (SANKYO) * ganzes Dokument * ---- | | |

RECHERCHIERTE SACHGEBIETE (Int. Cl.²)

A 23 K 1/17
A 61 K 31/35
A 61 K 31/365
C 07 D 407/06

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 22-02-1979 | SCHULTZE |